# EUROPEAN PATENT APPLICATION

(11) **EP 3 770 473 A1**
(43) Date of publication of application: **27.01.2021**
(21) Application number: 19188613.4
(22) Date of filing: 26.07.2019
(51) Int. Cl.: F16K 31/06, F16K 31/08

(54) **ANTI-ICE VALVE**

(71) Applicant: Microtecnica S.r.l., 10126 Turin (IT)
(72) Inventor: MEZZINO, Giacomo, Turin 10127 (IT); SALVATORIELLO, Gianfranco, Turin 10126 (IT)
(74) Representative: Dehns

(57) **Abstract**

The invention relates to a solenoid valve 100 for an aircraft anti-ice system. The solenoid valve 100 comprises: a solenoid 110; a yoke 120 arranged to be actuated by the solenoid 110 between a first yoke position and a second yoke position; and a plunger 130 arranged to be actuated between a first plunger position and a second plunger position to control fluid flow between fluid channels (142, 144, 146). The plunger 130 comprises a magnetic element 132 proximate the yoke 120. There is a gap 150 between the plunger 130 and the yoke 120 when the yoke 120 is in the second yoke position, so that magnetic force acting on the magnetic element 132 of the plunger 130 urges the plunger 130 to the second plunger position.

## Description

### Field

The invention relates to a solenoid valve, particularly to a solenoid valve for an anti-ice system for an aircraft.

### Background

Solenoid operated valves for aircraft anti-ice systems need to withstand extreme operational and environmental conditions. For example, such valves may be exposed to high vibrational accelerations (e.g. several tens times standard gravity), high temperature pneumatic mass flow (e.g. around 650° C), and high environmental temperatures (e.g. around 150° C). Indeed, such valves are often in an engine environment, and the ambient temperatures can easily reach 200°C, while spilled air-flow mass is typically heated up to 600°C to 700°C. The combination of thermal and mechanical effects represents a tough engineering challenge for designing a solenoid electrical core, and is typically focused on keeping the coil temperature at an acceptable level. In addition, structural integrity and performance compliance need to be ensured within a highly demanding vibrational environment.

Different types of 3-ways solenoid valves exist to address the above problems. Architecture for one configuration normally requires a re-setting spring on the pneumatic side of the valve, which spring is arranged to urge a plunger in the pneumatic flow to a first preferred position when the solenoid of the valve is de-energised. The solenoid may be energised to urge the plunger against the force of the spring and into a second position. However, the pneumatic side of the valve is exposed to the most extreme conditions, and the spring must therefore tolerate those conditions. Vibrations and thermal fatigue can mean that spring relaxation over the valve life time can be affected, and as such the use of springs is typically considered to be a risk and a possible reason for low reliability of the valves.

In an alternative configuration, the spring is located on an opposite side of the valve to the pneumatic side (e.g. near an opposite end of the plunger), and the solenoid is energised to the move plunger to the first preferred position, and de-energised to move it to the second position. The drawback of such solutions is that it is difficult to ensure correction positioning of the plunger in the pneumatic mass flow when the solenoid is energized. Therefore, such valves often rely on pressures within the mass flow acting to hold the plunger (or a ball actuated by the plunger) in the desired position. Leakage can then occur between fluid channels within the valve if the pressures fluctuate or are insufficient to hold the plunger (or ball) in position against high vibrations or accelerations.

In view of the above issues, improvements to solenoid valves for aircraft anti-ice systems for extreme conditions are therefore desirable.

### Summary

According to a first aspect of the present invention there is provided a solenoid valve for an aircraft anti-ice system comprising: a solenoid; a yoke arranged to be actuated by the solenoid between a first yoke position and a second yoke position; and a plunger arranged to be actuated between a first plunger position and a second plunger position to control fluid flow between fluid channels; wherein the plunger comprises a magnetic element proximate the yoke; and wherein there is a gap between the plunger and the yoke when the yoke is in the second yoke position, so that magnetic force acting on the magnetic element of the plunger urges the plunger to the second plunger position.

The plunger may be urged into - and held in - the second plunger position by magnetic attraction between the magnetic element of the plunger and the yoke. The plunger may move with the yoke e.g. at least partially. For example, when the yoke is actuated to the second yoke position, it may move the plunger to the second plunger position (e.g. by magnetic attraction to the magnetic element). When the yoke moves to the first position, it may move the plunger to the first position (e.g. by pushing on the magnetic element). The valve may therefore be arranged so that the plunger may therefore be in the first plunger position when the yoke is in the first yoke position, and may be in the second plunger position when the yoke is in the second yoke position.

The yoke may be made of any suitable material for actuation by the solenoid and magnetic attraction to the magnetic element of the plunger. The yoke may be magnetically susceptible and made magnetic by the solenoid, or may be magnetically responsive (i.e. responsive to magnetic fields). The yoke may therefore be actuated by action of an electromagnetic field generated by the solenoid. The yoke may comprise ferromagnetic material, or other suitably magnetically responsive or susceptible material.

The yoke may also move relative to the plunger. The yoke and plunger may move in substantially the same direction. The distance moved by the yoke between the first yoke position and the second yoke position may be greater than the distance moved by the plunger between the first plunger position and the second plunger position. There may not be a gap between the yoke and the plunger when the yoke is in the first yoke position and the plunger is in the first plunger position. That is, opposed faces of the plunger and the yoke may be contacting or adjacent when the yoke and the plunger are in their respective first positions. The gap may therefore be formed by movement of the yoke relative the plunger, so that the yoke is spaced from the plunger when it is in the second yoke position. The yoke may move the plunger from the first plunger position to the second plunger position by magnetic attraction between the magnetic element and the yoke, and/or may move the plunger to the first plunger position by contacting and bearing against the plunger to push it mechanically. The yoke may bear against the magnetic element of the plunger to move the plunger from the second plunger position to the first plunger position. The plunger may be arranged to be actuated by the yoke between the first plunger position and the second plunger position.

The solenoid may be energised to actuate the yoke, and may be energised to actuate the yoke from the first yoke position to the second yoke position. The plunger may also be actuated, at least partially, by the solenoid, and may be urged by the solenoid in the same direction as the yoke. That is, the electromagnetic field generated by the solenoid for actuating the yoke may also apply a force to the magnetic element of the plunger.

The fluid channels may be defined within a pneumatic side of the solenoid valve. The valve may be arranged so that movement of the plunger between the first plunger position and the second plunger position changes which fluid channels within the valve are fluidly connected to each other, thereby controlling fluid flow between those channels. Therefore, activation of the solenoid may control fluid flow between fluid channels.

The solenoid valve may comprise a biasing mechanism arranged to urge the yoke to the first yoke position. The solenoid valve may comprise a biasing mechanism arranged to actuate the yoke. The biasing mechanism may be arranged to urge the yoke against the action of the solenoid e.g. when the solenoid is energised. The solenoid may be arranged to overcome the urging force of the biasing mechanism to move the yoke e.g. to the second yoke position. Alternatively, the biasing mechanism may be arranged to urge the yoke to the second yoke position, and the solenoid may be energised to actuate the yoke to the first position. The biasing mechanism may be arranged to actuate the plunger, and may be arranged to urge the plunger to the first plunger position e.g. by contact with the yoke, so that movement of the yoke pushes the plunger to the first plunger position. The biasing mechanism may be arranged to actuate the plunger by actuating the yoke. The position of the yoke (and therefore also the position of the plunger) may therefore be determined by whether or not the solenoid is active. If the solenoid is energised, the biasing force of the biasing mechanism may be overcome so that the yoke and plunger are in one of their first or second respective positions, and when the solenoid is not de-energised, the biasing mechanism may return the yoke and plunger to the other of the first or second positions.

The yoke may urge the plunger to the first plunger position when the yoke is in the first yoke position. For example, an end of the plunger proximate the yoke may contact the yoke (e.g. when the yoke moves from the second yoke position) and thereby be urged into the first plunger position. The plunger may therefore be urged to the first plunger position by the biasing mechanism, via the yoke.

The biasing mechanism may be any suitable mechanism for urging the yoke and/or plunger to a preferred position. The biasing mechanism may be a biasing element. For example, the biasing mechanism may be spring. The biasing mechanism may be provided by gravity e.g. by virtue of orientation of the solenoid valve during use.

The solenoid may be operable to make the magnetic element of the plunger magnetic. The magnetic element of the plunger may or may not be permanently magnetic, and may or may not be magnetically attracted to the yoke when the solenoid is not energised. The magnetic element may be magnetically attracted to the yoke only when the solenoid is energised. That is, magnetism of the magnetic element may arise due to an electromagnetic field from the solenoid, so that upon activation of the solenoid, the magnetic element is thereby made magnetic and is attracted to the yoke. The magnetic element may therefore be a magnetically susceptible element arranged to be magnetised by exposure to an electromagnetic field. The magnetic element may be a second yoke. The magnetic element may comprise a ferromagnetic material, or other suitably magnetically susceptible material.

The yoke may contact the solenoid in the second yoke position. The yoke may bear against the solenoid so that opposing faces of the yoke and the solenoid are contacting, thereby ensuring firm contact therebetween for transmission of magnetic flux. Thus, there may be no gaps (e.g. air gaps) between the yoke and the solenoid when the yoke is in the second yoke position. Thus, only a small current may be needed for steady state operation of the solenoid to maintain the yoke in the second yoke position. The solenoid valve may therefore be energy efficient.

The solenoid may comprise opposed, angled faces arranged to contact the yoke when the yoke is in the second yoke position. The yoke may comprise angled faces arranged to contact the opposed, angled faces of the solenoid in the second yoke position. The faces may be angled relative to the direction of movement of the yoke i.e. not parallel or perpendicular thereto. The yoke may therefore simply couple with the solenoid e.g. by settling into a recess in the solenoid formed by the opposed angled faces of the solenoid. The provision of angled faces increases the surface area of contact between the yoke and the solenoid, thereby further increasing the magnetic flux through the contacting surfaces, and further improving energy efficiency of the solenoid valve. The angled faces may simultaneously serve to correctly position the yoke, thereby also serving to correctly position the plunger.

The magnetic force between the plunger and the yoke may be less than the magnetic force between the yoke and solenoid. For example, when the solenoid is energised, the yoke may be held against the solenoid with a stronger force than exists between the yoke and the plunger (i.e. the magnetic element of the plunger). The solenoid may therefore be operable to separate the yoke and the plunger (despite the magnetic attraction therebetween) so that the gap is formed therebetween when they are in their respective second positions. The yoke may be more massive than the plunger. The yoke may be held more firmly to the solenoid than the plunger is pulled towards the yoke. The magnetic force between the yoke and the solenoid may be about an order of magnitude greater that the magnetic force between the plunger and the yoke.

When the plunger and the yoke are in their respective second positions, the plunger may be attracted to the yoke by a force of a few Newtons e.g. 2N to 6N, or 3N to 5N, or about 4N. The yoke may be attracted to the solenoid with a force of a few tens of Newtons e.g. 10N to 100N, or 20N to 50N, or about 30N, or about 40N. The plunger may have a mass of a few grams, e.g. 1g to 7g, 3g to 5g, about 4g, or about 3.8g.

The yoke may comprise a socket arranged to receive at least a portion of the plunger. The socket may be a recess within the yoke. The plunger may move within the socket, and hence movement of the plunger relative to the yoke may be constrained by the socket. The socket may therefore limit movement of the plunger to a single dimension. The gap may be provided (e.g. formed) at one end of the socket, and the plunger may be partially disposed within the socket when the yoke is in the second yoke position and the plunger is in the second plunger position. The magnetic element may be partially or fully disposed within the socket when the yoke is in the second yoke position and the plunger is in the second plunger position. The magnetic element may be partially or fully disposed within the socket when the yoke is in the first yoke position and the plunger is in the first plunger position. The gap may therefore be formed between opposing faces of the plunger and the yoke, the opposing faces being within the socket. The plunger may be arranged to slide within the socket.

The plunger may comprise a fluid control portion disposed within a pneumatic portion of the solenoid valve, and may comprise an elongate bridge portion between the fluid control portion and the yoke. The fluid control portion may therefore be spaced from the yoke. The plunger may be disposed partially within a housing of the pneumatic portion of the solenoid valve. The fluid control portion may be arranged to move within the pneumatic portion of the valve to open and/or close fluid channels within the pneumatic portion. The magnetic element of the plunger may be adjacent the yoke, and may be on an end of the plunger proximate the yoke. The fluid control portion may be on an end of the plunger distal to the yoke, and may be on the opposite end of the plunger to the magnetic element. The fluid control portion may be a ball, or may have any other suitable shape to close fluid channels.

In use, the fluid control portion may be exposed to extreme conditions (e.g. disposed in mass flow of e.g. 500°C to 800°C, 600°C to 700°C, or about 650°C) and therefore my reach high temperatures. The elongate bridge portion may help insulate the end of the plunger near the yoke from the high temperatures, and may therefore insulate the magnetic element from the high temperatures within the pneumatic portion of the valve. The solenoid valve may be exposed to environmental temperatures of 100°C to 200°C, or about 150°C.

The solenoid valve may be arranged so that the yoke is actuated to the second yoke position when the solenoid is energised. The plunger may be actuated to the second plunger position when the solenoid is energised.

The solenoid valve may be arranged so that when the solenoid is energised the magnetic element of the plunger is attracted to the yoke with enough force to maintain the plunger in the second plunger position against vibrations up to 20g gravitational acceleration (i.e. twenty times standard gravity, where standard gravity is approximately 9.81 m/s²). The solenoid valve may be exposed to extreme vibration and acceleration e.g. of a few times standard gravity, or a few tens times standard gravity, or a hundred times standard gravity. The solenoid valve may be exposed to up to 5g, up to 20g, or up to 100g of acceleration (i.e. five, twenty or a hundred times the force of gravity). The solenoid, yoke, plunger and magnetic element may be arranged so that the plunger can be held in place (e.g. in the first and/or second plunger position) under such conditions, and therefore so that mass flow within the solenoid valve can be controlled under those conditions.

In the first plunger position, the plunger may allow fluid communication between a first fluid channel and a second fluid channel, and in the second plunger position the plunger may allow fluid communication between the first fluid channel and a third fluid channel. The fluid control portion of the plunger may open and close the fluid channels e.g. by movement of the plunger between the first and second plunger positions. In the first plunger position, the plunger may prevent fluid communication between the first fluid channel and the third fluid channel, and in the second plunger position the plunger may prevent fluid communication between the first fluid channel and the second fluid channel. The solenoid valve may be a three-way solenoid valve, or may be any suitable valve controllable by actuation of the plunger between the first and second plunger positions.

The solenoid may comprise windings and a core. The yoke may be disposed partially or fully within the windings. The yoke may abut the core of the solenoid when it is in the second yoke position. The solenoid valve may be an anti-ice valve. The yoke may be an armature. The magnetic element may be a second armature.

According to a second aspect of the invention, there is provided an anti-ice system for an aircraft comprising the solenoid valve described herein with reference to the first aspect of the invention.

The invention may provide an engine comprising the solenoid valve as described herein with reference to the first aspect of the invention. The invention may provide an aircraft comprising the solenoid valve as described herein with reference to the first aspect of the invention, or comprising the anti-ice system as described herein with reference to the second aspect of the invention.

According to a third aspect of the invention there is provide a method of controlling fluid flow between fluid channels of an aircraft anti-ice system, the method comprising actuating a plunger between a first plunger position and a second plunger position, and maintaining the plunger in the second plunger position using magnetic force acting on a magnetic element on the plunger.

The method may include urging the plunger to the second plunger position using the magnetic force. The method may comprise urging the plunger towards a gap using the magnetic force. The gap may be provided between the plunger and a yoke. The method may include actuating the plunger using yoke, the yoke being actuated by a solenoid. The method may comprise maintaining the plunger in the second plunger position using magnetic attraction of the magnetic element to the yoke.

The method may comprise using a solenoid valve as described herein with reference to the first aspect of the invention. The method may comprise using an anti-ice system as described herein with reference to the second aspect of the invention. The method may comprise using an engine or an aircraft as described herein. The method may comprise preventing and/or reducing ice build-up on an aircraft.

According to another aspect of the invention, there is provided a valve comprising a plunger comprising a magnetic element, wherein the plunger is arranged to be actuated from a first plunger position to a second plunger position by a magnetic force acting on the magnetic element. The valve may be arranged to maintain the plunger in the second plunger position using the magnetic force. The plunger may be actuated from the second plunger position to the first plunger position by a biasing mechanism. The plunger may be actuable for controlling fluid flow in fluid channels of the valve. The valve may be a solenoid valve as described herein with reference to the first aspect of the invention.

References herein to the valve or parts of the valve performing actions should be understood to mean that the valve or the parts is/are arranged and/or configured to perform those actions.

### Figures

Certain preferred embodiments of the invention are described in detail below by way of example only and with reference to the drawings in which:
Figure 1 shows a cross-section of a solenoid valve;
Figure 2 shows a cross-section of the solenoid valve of Fig. 1 in perspective;
Figure 3A shows a schematic of a portion of the solenoid valve of Figs. 1 and 2 in a first configuration; and
Figure 3B shows the schematic of Fig. 3A in a second configuration.

### Description

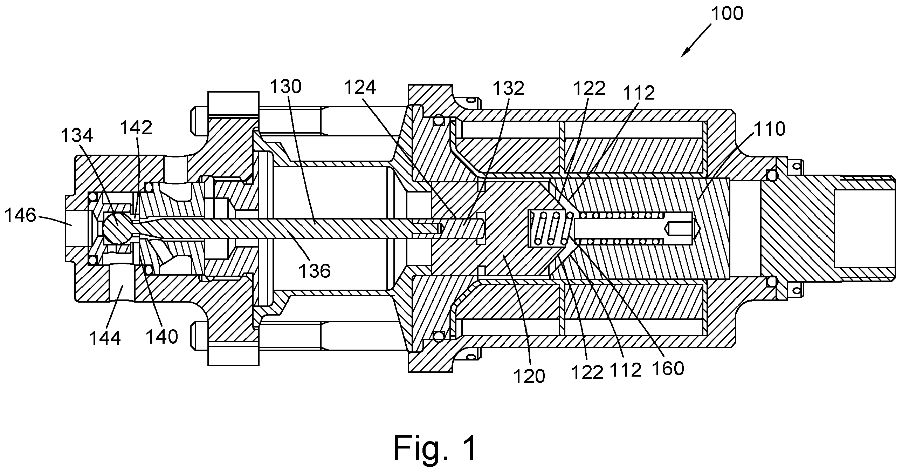

Figure 1 shows a cross-section of a solenoid valve 100, comprising a solenoid 110, a yoke 120, and a plunger 130. The plunger 130 comprises a magnetic element in the form of a magnetic cap 132 on the end of the plunger 130 proximate the yoke 120.

The solenoid valve 100 comprises a pneumatic portion 140, in which is defined a plurality of fluid channels 142, 144, 146. The plunger 130 comprises a fluid control portion in the form of a ball-head 134 disposed on a distal end of the plunger 130, opposite the magnetic cap 132. The plunger 130 is actuated to control fluid communication between the fluid channels 142, 144, 146 by the ball had 134 opening and closing those channels. The plunger 130 also comprises an elongate bridge portion 136 separating the opposite ends of the plunger 130 i.e. separating the magnetic cap 132 and the ball head 134. The plunger 130 is therefore disposed partially within the pneumatic portion 140 of the valve 100.

The yoke 120 is movable between a first yoke position (leftmost in the orientation of Fig. 1) and a second yoke position (rightmost in the orientation of Fig. 1). In Fig. 1, the yoke 120 is shown in the first yoke position. A proximal end of the plunger 130 comprising the magnetic cap 132 is disposed within a socket 124 of the yoke 120 and bears against a surface of the yoke 120 so that when the yoke 120 is in the first yoke position the plunger 130 is in a first plunger position (leftmost in the orientation of Fig. 1). A biasing mechanism in the form of a spring 160 is provided to bias the yoke 120 to the first yoke position, and thereby also to bias the plunger 130 to the first plunger position.

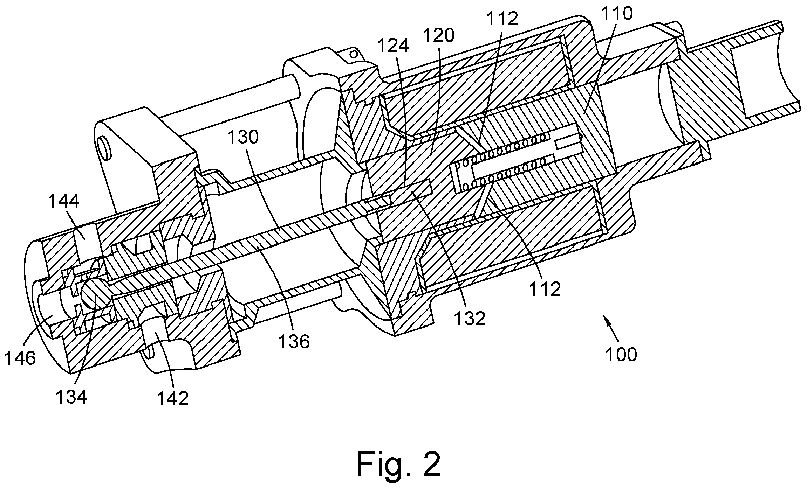

Figure 2 shows a cross-section of the solenoid valve 100 of Fig. 1 in perspective. The yoke 120 is shown in the first yoke position and the plunger 130 is shown in the first plunger position.

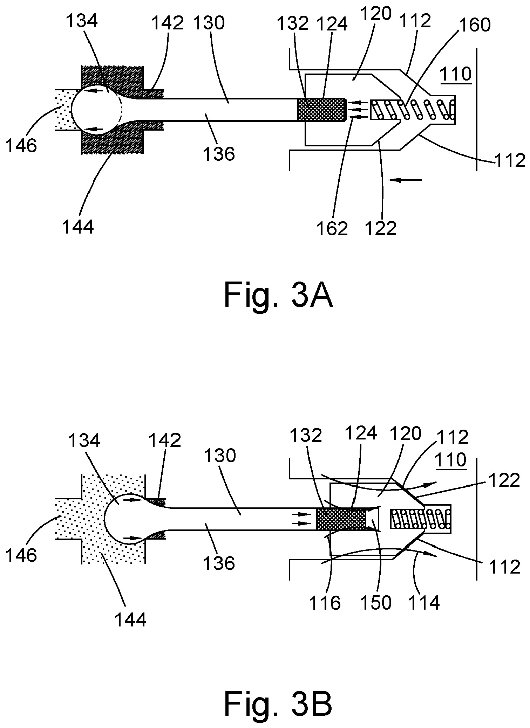

Figures 3A and 3B show a schematic of the operation of the solenoid valve 100. Figure 3A shows the yoke 120 in the first yoke position and the plunger 130 in the first plunger position when the solenoid 110 is not energised. The spring 160 urges the yoke 120 towards the first yoke position, and the yoke 120 thereby bears against the magnetic cap 132 at the proximal end of the plunger 130 and urges the plunger 130 the first plunger position.

In the first plunger position, the ball head 134 of the plunger 130 is spaced from a first fluid channel 142 thereby allowing fluid communication between the first fluid channel 142 and a second fluid channel 144. Force from the spring 160 keeps the ball head 134 seated in firm contact with an opening of a third fluid channel 146, thereby closing the third fluid channel 146 and preventing fluid communication between the third fluid channel 146 and either or both of the first fluid channel 142 or the second fluid channel 144.

Figure 3B shows the yoke 120 in the second yoke position and the plunger 130 in a second plunger position. To move the solenoid valve 100 to its second configuration, the solenoid 110 is energised and the yoke 120 is moved by magnetic force from the solenoid 110 to the second yoke position (rightmost in the orientation shown in Fig. 3B). Magnetic force from the solenoid 110 acting on the yoke 120 is indicated schematically by the arrows 114 in Fig. 3B. Initially, the magnetic cap 132 of the plunger 130 is held against the yoke 120 by magnetic attraction thereto. However, once the ball head 134 contacts in opening of the first fluid channel 142 further movement of the plunger 130 is prevented. The solenoid 110 applies a greater magnetic force to the yoke 120 than exists between the yoke 120 and the magnetic cap 132, and the yoke 120 is therefore pulled away from the magnetic cap 132 and a gap 150 is formed between the yoke 120 and the magnetic cap 132 of the plunger 130. When the yoke 120 is in the second yoke position, the magnetic cap 132 of the plunger 130 is attracted to the yoke 120 by magnetic force and is therefore urged to and held in the second plunger position.

In the second plunger position the ball head 134 of the plunger 130 seals the opening of the first fluid channel 142, thereby preventing fluid communication between the first fluid channel 142 and either or both of the second fluid channel 144 and the third fluid channel 146. Movement of the plunger 130 to the second plunger position opens the third fluid channel 146 so that it may fluidly communicate with the second fluid channel 144. Therefore movement of the plunger 130 between the first plunger position and the second plunger position controls fluid communication between the fluid channels 142, 144, 146 within the solenoid valve 100.

The yoke 120 moves a greater distance between the first yoke position and the second yoke position than the plunger 130 moves between the first plunger position and the second plunger position. The gap 150 is therefore created between the plunger 130 and the yoke 120. Magnetic force acting on the magnetic cap 132 of the plunger 130 urges the plunger 130 into the gap 150, though movement of the plunger 130 into the gap 150 is prevented by the ball head 134 held against the opening of the first fluid channel 142.

The solenoid 110 may exert a magnetic force on the magnetic cap 132 as well as on the yoke 120, thereby helping to urge the magnetic cap 132 to move the plunger 130 to the second plunger position. The arrows 116 in Fig. 3B schematically show the magnetic force from the solenoid 110 acting on the magnetic cap 132.

The magnetic cap 132 may or may not be a permanent magnet, and it may therefore be a magnetically susceptible element which becomes magnetic only in the presence of an electromagnetic field from the solenoid 110. Alternatively, the magnetic element may be a permanent magnet and may permanently be attracted to the yoke 120.

The yoke 120 comprises the socket 124 into which the proximal end of the plunger 130 is inserted. The magnetic cap 132 is disposed partially within the socket 124 of the yoke 120 in both the first and second configurations of the solenoid valve 100 (i.e. when the plunger 130 is in both the first plunger position and the second plunger position). The gap 150 is created within the socket 124 of the yoke 120 when the yoke 120 is in the second yoke position. The plunger 130 is freely movable within the socket 124 of the yoke 120 but is not mechanically coupled to the yoke 120 so that small movements of the plunger 130 relative to the yoke 120 are possible. The plunger 130 may therefore move to firmly seat the ball head 134 in the opening of the first fluid channel 142 to close that channel.

The gap 150 also serves to insulate the yoke 120 and the solenoid 110 from the extreme temperatures experienced by the plunger 130. Mass fluid flow through the fluid channels 142, 144, 146 can reach temperatures of around 650° C or higher and it is well known that high temperatures cause degradation of electrical and/or magnetic components. The free movement of the plunger 130 in the socket 124 of the yoke 120, and the gap 150, help prevent conductive heat transfer from the plunger 130 to the electronic components (e.g. the yoke 120 and the solenoid 110) of the solenoid valve 100, thereby improving durability and longevity of the solenoid valve 100. This contrasts with solenoid valves in which the plunger is mechanically and rigidly coupled to the yoke.

The gap 150 is arranged so that the plunger 130 is constantly urged into the second plunger position e.g. at the proximate end of the plunger 130 furthest from the pneumatic portion 140. The gap 150 is therefore arranged in the direction in which the plunger 130 is urged to move by magnetic attraction to the yoke 120. Some surfaces of the plunger 130 may be adjacent surfaces of the yoke 120 in both the first and second configurations of the solenoid valve 100 e.g. the sides of the plunger 130 within the socket 124 of the yoke 120.

From Figs. 3A and 3B it can be seen that the plunger 130 is held in the second plunger position by magnetic force acting on the magnetic cap 132 pulling the plunger 130 towards the solenoid 110. When the solenoid is de-energised the spring 160 urges the yoke 120 and the plunger 130 to their respective first positions, and thereby pushes the ball head 134 of the plunger 130 against the opening of the third fluid channel 146 in order to close that channel.

The solenoid 110 comprises opposed angled faces 112 (e.g. forming a recessing with the solenoid) arranged to contact corresponding opposed faces 122 of the yoke 120 when the yoke 120 is in the second yoke position. The faces 112 and 122 are angled with respect to the direction of movement of the yoke 120. Contact between the solenoid 110 and the yoke 120 provides a good pathway for magnetic flux so that the solenoid 110 may be operated in a steady-state using a relatively low current, and the yoke 120 and plunger 130 may be held in their respective second positions efficiently. This contrasts with solenoid valves in which e.g. the solenoid and the yoke are separated in all configurations. The transmission of magnetic flux through the yoke 120 also increases the magnetic force experienced by the magnetic cap 132. The angled faces 112 and 122 increase the contact surface area between the solenoid 110 and the yoke 120, increasing the energy efficiency of the solenoid valve 100. The angled faces 112 and 122 of the solenoid 110 yoke 120 also work together with the free movement of the plunger 130 in the socket 124 to allow small position adjustments to help correctly locate and securely seat the ball head 134 of the plunger 130 in the second plunger position.

The solenoid valve 100 is configured for use in extreme environments. The solenoid valve 100 may be exposed to high vibrational accelerations (e.g. 20g or more), high pneumatic mass flow temperatures (e.g. about 650°C or more), and or high environmental temperatures (e.g. 150° C or more). As such, it is necessary for the solenoid valve 100 to be extremely durable and highly robust. The solenoid valve 100 has a simple construction on the pneumatic side 140, which side is predominantly exposed the highest temperatures due to the high temperature mass flow therein. For example, the solenoid valve 100 does not include a spring or the like on the pneumatic side 140 of the solenoid valve 100 to return the plunger 130 to a preferred position, which springs are notoriously prone to failure e.g. because of exposure to extreme temperatures. As such the solenoid valve 100 is less susceptible to component wear, fatigue and/or failure than other valves.

The design of the solenoid valve herein ensures a mutual force is continuously shared between the plunger 130 and the yoke 120. The design avoids any rigid mechanical contact between the parts. When coils of the solenoid 110 are deenergized, the spring 160 compresses the yoke 120 and the plunger 130. When the solenoid is in an energized state, the magnetic flux ensures a pulling force is directly transferred to the plunger 130.

## Claims

1. A solenoid valve for an aircraft anti-ice system comprising:
a solenoid (110);
a yoke (120) arranged to be actuated by the solenoid (110) between a first yoke position and a second yoke position; and
a plunger (130) arranged to be actuated between a first plunger position and a second plunger position to control fluid flow between fluid channels (142, 144, 146);
wherein the plunger (130) comprises a magnetic element (132) proximate the yoke (120); and
wherein there is a gap (150) between the plunger (130) and the yoke (120) when the yoke (120) is in the second yoke position, so that magnetic force acting on the magnetic element (132) of the plunger (130) urges the plunger (130) to the second plunger position.

2. A solenoid valve as claimed in claim 1, comprising a biasing mechanism (160) arranged to urge the yoke (120) to the first yoke position.

3. A solenoid valve as claimed in claim 1 or 2, wherein the yoke (120) urges the plunger (130) to the first plunger position when the yoke (120) is in the first yoke position.

4. A solenoid valve as claimed in any of claims 1, 2 or 3, wherein the solenoid (110) is operable to make the magnetic element (132) of the plunger (130) magnetic.

5. A solenoid valve as claimed in any preceding claim, wherein the yoke (120) contacts the solenoid (110) in the second yoke position.

6. A solenoid valve as claimed in claim 5, wherein the solenoid (110) comprises opposed, angled faces (112) arranged to contact the yoke (120) when the yoke (120) is in the second yoke position.

7. A solenoid valve as claimed in any preceding claim, wherein the magnetic force between the plunger (130) and the yoke (120) is less than the magnetic force between the yoke (120) and solenoid (110).

8. A solenoid valve as claimed in any preceding claim, wherein the yoke (120) comprises a socket (124) arranged to receive at least a portion of the plunger (130).

9. A solenoid valve as claimed in any preceding claim, wherein the plunger (130) comprises a fluid control portion (134) disposed within a pneumatic portion (140) of the solenoid valve, and comprises an elongate bridge portion (136) between the fluid control portion and the yoke (120).

10. A solenoid valve as claimed in any preceding claim, wherein the solenoid valve is arranged so that the yoke (120) is actuated to the second yoke position when the solenoid (110) is energised.

11. A solenoid valve as claimed in any preceding claim, wherein when the solenoid (110) is energised the magnetic element (132) of the plunger (130) is attracted to the yoke (120) with enough force to maintain the plunger (130) in the second plunger position against vibrations up to 20g acceleration.

12. A solenoid valve as claimed in any preceding claim, wherein in the first plunger position, the plunger (130) allows fluid communication between a first fluid channel (142) and a second fluid channel (144), and wherein in the second plunger position the plunger (130) allows fluid communication between the first fluid channel (142) and a third fluid channel (146) .

13. An anti-ice system for an aircraft comprising the solenoid valve of any preceding claim.

14. A method of controlling fluid flow between fluid channels (142, 144, 146) of an aircraft anti-ice system, the method comprising actuating a plunger (130) between a first plunger position and a second plunger position, and maintaining the plunger (130) in the second plunger position using magnetic force acting on a magnetic element (132) on the plunger (130).

15. A method as claimed in claim 14, comprising using a solenoid valve as claimed in any of claim 1 to 12, or using an anti-ice system as claimed in claim 13.
